# EUROPEAN PATENT SPECIFICATION

(11) **EP 2 375 649 B1**
(45) Date of publication and mention of the grant of the patent: **14.11.2018**
(21) Application number: 09834029.2
(22) Date of filing: 25.08.2009
(51) Int. Cl.: H04L 29/06

(54) **NUMBER RECEPTION METHOD BASED ON MEDIA GATEWAY CONTROL PROTOCOL AND MEDIA GATEWAY CONTROLLER**
NUMMERNEMPFANGSVERFAHREN AUF DER BASIS EINES MEDIEN-GATEWAY-STEUERUNGSPROTOKOLLS UND MEDIEN-GATEWAY-STEUERUNG
PROCÉDÉ DE RÉCEPTION DE NUMÉRO BASÉ SUR UN PROTOCOLE DE CONTRÔLE DE PASSERELLE MULTIMÉDIA ET CONTRÔLEUR DE PASSERELLE MULTIMÉDIA

(30) Priority: 26.12.2008 CN 200810246870
(43) Date of publication of application: 12.10.2011
(73) Proprietor: ZTE Corporation, Shenzhen, Guangdong 518057 (CN)
(72) Inventor: LI, Guojie, Guangdong 518057 (CN)
(74) Representative: Office Freylinger
(86) International application number: PCT/CN2009/073499
(87) International publication number: WO 2010/072076

(56) References cited:
- EP-A2- 1 179 927
- CN-A- 1 661 969
- CN-A- 1 997 084
- CN-A- 101 483 703
- KR-A- 20040 031 891
- CHRISTIAN HUITEMA FLEMMING ANDREASEN BELLCORE MAURICIO ARANGO RSL COM PRAKASH K TELESOFT INC: "Media Gateway Control Protocol (MGCP) Call Flows Christian Huitema, Flemming Andreasen, Mauricio Arango, Prakash K; draft-ietf-megaco-mgcp-flows-01 .txt", 19990120, vol. megaco, no. 1, 20 January 1999 (1999-01-20), XP015022830, ISSN: 0000-0004

## Description

### Field of the Invention

The present invention relates to the communication field, and specifically to methods for collecting numbers based on media gateway control protocol and a media gateway controller.

### Background of the Invention

IP telephone has become a favorite of a large number of users, especially of companies with a larger traffic because of its low cost. The total process of making a call by VOIP via internet is that: voice is converted to be analog signal(s) via a telephone set; the analog signal(s) is/are converted to be digital signal(s) via Voice Over IP (VOIP) terminal A based on IP protocol and then the digital signal(s) is/are packed be to a packet; the packet is transmitted to another VOIP terminal B on the internet; and the VOIP terminal B converts the received packet to be analog signal(s) which is/are converted to be voice by a telephone set. There are three types of the protocols related to the VOIP, i.e., Media Gateway Control Protocol (MGCP), Session Initiation Protocol (SIP) and H.323 Protocol. Since the MGCP is based on internet mechanism, its transmission mechanism can not guarantee that signaling is sequentially transmitted and received and may result in number disorder due to the problems such as network delay. For this, a "quarantine list" mechanism is defined in the MGCP; and the "quarantine list" is described in details in the MGCP. However, solutions for processing some special occasions, for example, the processing of Embedded Notification Request and the processing of reporting of off-hook and on-hook, are not provided in the MGCP. In actual application, some Media Gateway Controllers (MGC) may collect numbers in a stepwise manner because they can not know a detailed digit map. Owing to the times of interaction is comparatively larger, and the occupation of resources is comparatively high, the problem of losing number tends to occur, which results in a decreased customer satisfaction.

The related document (EP1179927A2) discloses method for controlling services levels over packet based networks; the related document ("Media Gateway Control Protocol (MGCP) Call Flows") discloses the media gateway control protocol.

### Summary of the Invention

In view of this, the main object of the present invention is to provide a method for collecting numbers based on media gateway control protocol according to claim 1 and a system according to claim 9. Further embodiments are described in the dependent claims.

### Brief Description of the Drawings

The figures illustrated here provide a further understanding to the present invention and form a part of the present application. The schematic embodiments of the present invention and explanations thereof are used to explain the present invention without unduly limiting the present invention, wherein:
Figure 1 is a schematical flow chart of a method for collecting numbers based on media gateway control protocol according to Embodiment 1 of the present invention;
Figure 2 is a schematical flow chart of a method for collecting numbers based on media gateway control protocol according to Embodiment 2 of the present invention; and
Figure 3 is a block diagram of the structure of a media gateway controller according to the embodiments of the present invention.

### Detailed Description of the Preferred Embodiments

### Function overview

In the related art, a media gateway controller has to receive numbers in a stepwise manner for it can not know a detailed digit map, which will lead to the problems that number tends to be lost and comparatively more resources are occupied, and further leads to a decreased customer satisfaction. In view of this, the present invention provides a solution for collecting numbers based on media gateway control protocol. The basic concept of the solution is that: when the number of numbers to be received is determined to be two or more, the media gateway controller of the present invention sends to the media gateway an Embedded Notification Request and an RQNT comprising number receiving request information; and then the media gateway reports the two numbers. To avoid possible accidents in the process of receiving numbers due to an on-hook of the terminal, when the on-hook of the terminal is detected, the media gateway of the present invention immediately deletes numbers in the quarantine list and reports on-hook information. When a CRCX and the Embedded Notification Request are received, the media gateway first processes the CRCX and then the Embedded Notification Request after the processing of CRCX is finished. In the case of a complete digit map, instead of receiving numbers in a stepwise manner, the matched numbers are reported together in the present invention, thereby number loss is avoided in the occasions that numbers need to be received in a stepwise manner and the Embedded Notification Request is used. By means of the present invention, processing resources are saved in the process of receiving numbers.

To make the object, technical solution and advantages of the present invention more clearly, the present invention will be illustrated by combining the embodiments and the accompanying drawings in details hereinafter. It should be noted that the embodiments of the present invention and the technical features of the embodiments can be combined with each other if there is no conflict.

### Method Embodiments

### Embodiment 1

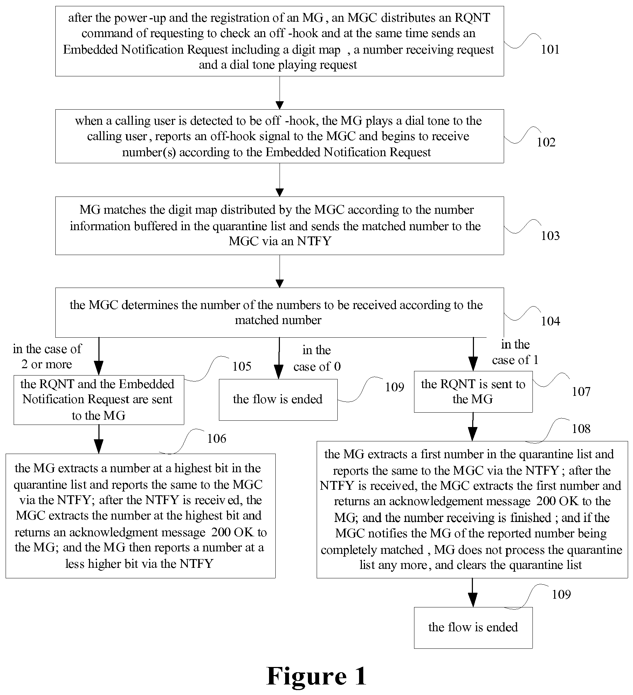

Figure 1 is a schematical flow chart of a method for collecting the number based on media gateway control protocol according to the embodiment of the present invention. As shown in Figure 1, the method comprises the following steps.

Step 101: after the power-up and the registration of an MG, an MGC distributes an RQNT command of requesting to check an off-hook and at the same time sends an Embedded Notification Request comprising a digit map, a number receiving request and a dial tone playing request; and the above Embedded Notification Request is embedded in the RQNT.

If the MGC does not distribute the Embedded Notification Request of requesting to check an off-hook after the power-up and the registration of the MG, the MG reports an off-hook event; and the MGC sends to the MG the RQNT command of the digit map, the number receiving request and the dial tone playing request.

Step 102: when a calling user is detected to be off-hook, the MG plays a dial tone to the calling user, reports an off-hook signal to the MGC and begins to receive number(s) according to the Embedded Notification Request.

Receiving numbers by the MG is mainly to check the numbers dialed by a user and order the numbers according to the sequence number of the packet where the received number is located, i.e., numbers dialed first is stored in a higher bit of the quarantine list and the numbers are stored and reported successively in the dialing sequence of the user. Taking the fact that a user dials all the numbers of "02582571209" by a redial key in a short time as an example, after the eleven bit number of "02582571209" is received; and the MG stores the number in the sequence of "02582571209" according to the dialing sequence of the user.

Step 103: MG matches the digit map stored by itself according to the number information buffered in the quarantine list and sends the matched number to the MGC via an NTFY.

Rules for Matching shall be: performing match between a number with the highest bit among all numbers in the distributed digit map and a number from a first number received by the quarantine list; if there is a matched item, one more number being added to match numbers with highest two bits among all the numbers in the distributed digit map until the number that can match the maxim number, which is the matched number, is determined. The MG first takes out "0" from "02582571209", and performs match between it and the number at a highest bit in the digit map; if they are matched, the MG takes out "02" and performs match between it and the numbers at the highest two bits in the digit map; if they are matched, the MG takes out "025" and performs match between it and the numbers at the highest three bits in the digit map; and until the number that can match the maxim number is found, for example "025", the MG reports "025" as a whole to the MGC. "025" will be deleted from the quarantine list after reporting is finished.

Step 104: the MGC determines the number of the numbers to be received according to the matched number. When the number of the numbers to be received is two or more, step 105 is performed; when the number is one, step 107 is performed; when the number is zero, step 109 is performed and the flow is ended, wherein the number receiving request information is included in both the RQNT and the Embedded Notification Request.

Step 105: the RQNT and the Embedded Notification Request are sent to the MG.

Both the above RQNT and the Embedded Notification Request include the number receiving request information and are used to notify the MG to report the numbers dialed by a user.

Step 106: the MG extracts a number at a highest bit in the quarantine list and reports the same to the MGC via the NTFY. After the NTFY is received, the MGC extracts the number at the highest bit and returns an acknowledgment message 200 OK to the MG. The MG then reports a number at a less higher bit via the NTFY; and step 104 is returned to after finishing the reporting.

The MG receives the RQNT, extracts a number "8" from the quarantine list and reports the same to the MGC. After the NTFY is received, the MGC returns 200 OK. The MG deletes the number "8".

After 200 OK is received, the MG begins to process the Embedded Notification Request, likewise, the MG extracts a number of "2" from the quarantine list, reports the same to the MGC and deletes the number of "2".

The MGC checks and confirms to have received the two numbers ("8" and "2"). According to a district number of "025", it needs to continue to receive numbers; and step 104 is performed to perform number receiving.

Step 107: the RQNT is sent to the MG.

The above RQNT Number receiving request information is included in and notifies the MG to report the numbers dialed by the user.

Step 108: the MG extracts a first number in the quarantine list and reports the same to the MGC via the NTFY. After the NTFY is received, the MGC extracts the first number and returns an acknowledgement message 200 OK to the MG; and the number receiving is finished. If the MGC notifies the MG of the reported number being completely matched, MG does not process the quarantine list any more, and clears the quarantine list; and step 109 is performed and the flow is ended.

For an 8 bit number of "82571209", the flow is finished after numbers is received by four times. The MGC notifies the MG of the reported number being completely matched, MG does not process the quarantine list any more, and clears the quarantine list. However, for a 7 bit number, there must is the case of receiving one bit number by the last time. In this case, number receiving is finished when the last number is received; although number information still remains in the quarantine list, the quarantine list will be cleared; and step 109 is performed and the flow is ended.

To improve the implementing effect of the present invention, after the number receiving is finished, the following is also comprised: after finishing receiving numbers, the MGC sends a CRCX to the MG. When the CRCX and the Embedded Notification Request sent by the MGC are received, the MG processes the CRCX first, and the Embedded Notification Request after processing the CRCX is finished.

After all numbers are collected, the MGC distributes a CRCX command to the MG and a called flow is entered. After the CRCX command is received, considering the Embedded Notification Request may be carried, the MG will not process R parameter until the CRCX command being processed is finished. Therefore, it is ensured that parameters related to media access can be carried in signaling of 200 OK when the MG returns the signaling of 200 OK to the MGC.

### Embodiment 2

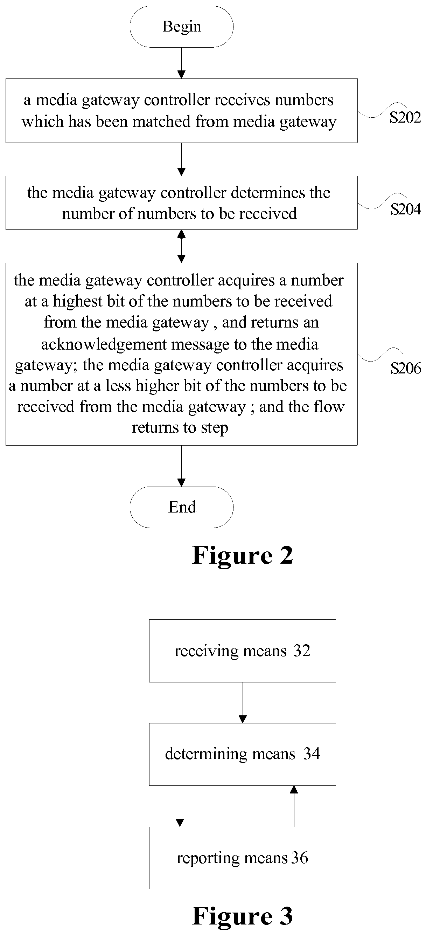

According to one embodiment of the present invention, there is provided a method for collecting numbers based on media gateway control protocol. Figure 2 is a flow chart schematically showing the method for collecting numbers based on media gateway control protocol according to Embodiment 2 of the present invention. As shown in Figure 2, the above method comprises processes from steps 202 to 206.

Step 202: a media gateway controller receives numbers after matching from media gateway.

Step 204: the media gateway controller determines the number of numbers to be received.

Step 206: the media gateway controller acquires a number at a highest bit of the numbers to be received from the media gateway, and returns an acknowledgement message to the media gateway. The media gateway controller acquires a number at a less higher bit of the numbers to be received from the media gateway; and the flow returns to step 204. The specifically process is: when the number of the numbers to be received is two or more, the media gateway extracting a number at the highest bit of the numbers to be received and reporting the same to the media gateway controller via an NTFY; after the NTFY is received, the media gateway controller extracting the number at the highest bit and returning an acknowledgement message to the media gateway; the media gateway reporting the number at the less higher bit of the numbers to be received via the NTFY; and the step S204 being returned to; and when the number of the numbers to be received is one, the media gateway extracting the number at the highest bit of the numbers to be received and reporting the same to the media gateway controller via the NTFY; after the NTFY is received, the media gateway controller extracting the number at the highest bit of the numbers to be received and returning an acknowledgement message to the media gateway; and the flow being finished.

Preferably, before step 202, the method may further comprise: the media gateway controller sending a notification request RQNT to the media gateway, wherein the RQNT comprises number receiving request information; and the media gateway receiving the number receiving request information, matching a digit map distributed by the media gateway controller according to number information buffered in a quarantine list, and sending matched number to the media gateway controller via the notification message NTFY.

According to the embodiments of the present invention, a computer readable media is also provided, in which instructions implementable by a computer are stored. When the instructions are executed by a computer or a processor, the computer or the processor is made to perform the processes of each step shown in Figures 1 and 2; and preferably, one or more of the above method embodiments can be performed.

### Apparatus Embodiment

According to the embodiments of the present invention, a media gateway controller is provided. Figure 3 is a block diagram of the structure of the media gateway controller according to the embodiments of the present invention. As shown in Figure 3, the media gateway controller comprises: receiving means 32, configured to received a number which has been matched from a media gateway; determining means 34, connected to the receiving means 32, configured to determine the number of numbers to be received and dispatch reporting means 36 to report the numbers to be received; and the reporting means 36, connected to the determining means 34, configured to acquire a number at a highest bit of the numbers to be received from the media gateway, return an acknowledgement message to the media gateway, acquire a number at a less higher bit of the numbers to be received from the media gateway, and dispatch the determining means to determine again the number of the numbers to be received.

The advantageous effect of the solutions provided by the embodiments of the present invention is obvious. In the case of a complete digit map, such as making an emergency call 110 by a user, instead of receiving numbers in a stepwise manner, numbers are reported to the MGC as a whole. In the case of receiving numbers in a stepwise manner and using the Embedded Notification Request, losing number is avoided; and the remaining numbers need not to be processed by using the manner that an on-hook is reported immediately to interrupt a current number receiving, which reduces unnecessary processes. The present invention is simple to be carried out, reduces information traffic in the process of number receiving and saves resources of the processing.

In addition, the system architecture and the current processing flows do not need to be modified to implement the present invention. Therefore, it is simple to be carried out, easy to be popularized in the technical field and possesses a strong industrial applicability.

Obviously, those skilled in the art shall understand that individual modules and individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several means or steps in to a single IC. Thus, the present invention is not limited to any particular combination of hardware and software.

Above description is only to illustrate the preferred embodiments but not to limit the present invention. Various alterations and changes to the present invention are apparent to those skilled in the art. The scope of the invention is defined by the appended claims.

## Claims

1. A method for collecting numbers based on the media gateway control protocol, comprising:
A. a media gateway reporting an off-hook signal to a media gateway controller; the media gateway controller sending a notification request RQNT to the media gateway, wherein the RQNT comprises number receiving request information (102);
B. the media gateway receiving the number receiving request information, matching a number list distributed by the media gateway controller with number information buffered in a quarantine list, and sending matched number(s) to the media gateway controller via a notification message NTFY (103);
C. the media gateway controller determining the quantity of numbers to be received according to the matched number(s), sending the RQNT and an Embedded Notification Request to the media gateway when the quantity of numbers to be received is two or more, after which step D is performed; and sending the RQNT to the media gateway when the quantity of numbers to be received is one, after which step E is performed; wherein the method is ended when the quantity of numbers to be received is zero, wherein the number receiving request information is comprised in both the RQNT and the Embedded Notification Request (104,105,107,109);
D. the media gateway extracting a number at the highest position in the quarantine list and reporting the same to the media gateway controller via the NTFY; after receiving the NTFY, the media gateway controller extracting the number at the highest position and returning an acknowledgment message to the media gateway; the media gateway then reporting a number at the second highest position via the NTFY; and then returning to step C (106); and
E. the media gateway extracting a first number in the quarantine list and reporting the same to the media gateway controller via the NTFY; after the NTFY is received, the media gateway controller extracting the first number and returning an acknowledgement message to the media gateway; and then the method being ended (108).

2. The method according to Claim 1, **characterized in that** after the reporting of number(s) by the media gateway is successful, the number(s) reported successfully is/are deleted from the quarantine list; and when a message indicating the number(s) reported is/are completely matched is received, the quarantine list will be cleared without being processed anymore.

3. The method according to Claim 2, **characterized in that** the method further comprises:
in the process of reporting the number(s) by the media gateway, when a user is detected to be on-hook, the quarantine list is cleared, and the on-hook is immediately reported to the media gateway controller.

4. The method according to Claim 2, **characterized in that** the media gateway controller sends a media connection establishment message CRCX to the media gateway after receiving the number(s) is finished.

5. The method according to Claim 4, **characterized in that** the method further comprises:
when the media gateway receives the CRCX and the Embedded Notification Request sent by the media gateway controller, the media gateway processing the CRCX first and then the Embedded Notification Request after finishing processing CRCX.

6. The method according to any one of Claims 1 to 5, **characterized in that** the matched number is obtained by the following manner:
performing a match between a number with the highest position among all numbers in the distributed number list and a number from a first number received by the quarantine list; if there is a matched item, one more number being added to match numbers with the highest two positions among all the numbers in the distributed number list until a number that has a maximum matched quantity, which is the matched number, is determined.

7. The method according to Claim 6, **characterized in that** the method further comprises: when a user reports an off-hook, the digit map is being distributed by the media gateway controller to the media gateway or the digit map is being distributed by the media gateway controller to the media gateway when the media gateway is powered up.

8. The method according to Claim 6, **characterized in that** the numbers in the quarantine list are ordered in the sequence of packets of numbers received by the media gateway; and the media gateway reports the numbers in the sequence from the highest position to the lowest position in the quarantine list.

9. A system comprising a media gateway and a media gateway controller, wherein the media gateway and the media gateway controller are configured to perform the steps of any one of claims 1 to 8.

## Patentansprüche

1. Verfahren zum Sammeln von Nummern basierend auf dem Media-Gateway-Steuerungsprotokoll, umfassend:
A. Melden, durch ein Media Gateway, eines Auflegenssignals, an eine Media-Gateway-Steuereinheit; wobei die Media-Gateway-Steuereinheit eine Benachrichtigungsanforderung RQNT an den Media-Gateway sendet, wobei die RQNT Nummernempfangs-Anforderungsinformationen (102) umfasst;
B. Empfangen, durch den Media Gateway, der Nummernempfangs-Anforderungsinformationen, Abgleichen einer Nummernliste, die von der Media-Gateway-Steuereinheit ausgegeben wurde, mit in einer Quarantäneliste gepufferten Nummerninformationen, und Senden einer übereinstimmenden Nummer (von übereinstimmenden Nummern) an die Media-Gateway-Steuereinheit über eine Benachrichtigungsnachricht NTFY (103);
C. Bestimmen, durch die Media-Gateway-Steuereinheit, der Menge der gemäß den übereinstimmenden Nummer(n) zu empfangenden Nummern, Senden der RQNT und einer eingebetteten Benachrichtigungsanfrage an den Media Gateway, wenn die Menge der zu empfangenden Nummern zwei oder mehr beträgt, woraufhin Schritt D ausgeführt wird; und Senden der RQNT an den Media Gateway, wenn die Menge der zu empfangenden Nummern eins beträgt, woraufhin Schritt E ausgeführt wird; wobei das Verfahren beendet wird, wenn die Menge der zu empfangenden Zahlen null beträgt, wobei die Nummernempfangs-Anforderungsinformationen sowohl in der RQNT als auch in der eingebetteten Benachrichtigungsanfrage (104, 105, 107, 109) enthalten sind;
D. Extrahieren, durch den Media Gateway, einer Nummer an der höchsten Position in der Quarantäneliste und Melden dieser über die NTFY an die Media-Gateway-Steuereinheit; nach Empfang der NTFY, Extrahieren, durch die Media-Gateway-Steuereinheit, der Nummer an der höchsten Position und Zurücksenden einer Quittierungsnachricht an den Media Gateway; dann Melden, durch den Media Gateway, über die NTFY einer Nummer an der zweithöchsten Position; und dann Zurückkehren zu Schritt C (106); und
E. Extrahieren, durch den Media Gateway, einer ersten Nummer in der Quarantäneliste und Melden dieser über die NTFY an die Media-Gateway-Steuereinheit; nach Empfang der NTFY, Extrahieren, durch die Media-Gateway-Steuereinheit, der ersten Nummer und Zurücksenden einer Quittierungsnachricht an den Media Gateway; und dann Beenden des Verfahrens (108).

2. Verfahren gemäß Anspruch 1, **dadurch gekennzeichnet, dass**, nachdem das Melden einer Nummer (von Nummern) durch den Media Gateway erfolgreich war, die erfolgreich gemeldete(n) Nummer(n) aus der Quarantäneliste gelöscht wird (werden); und wenn eine Nachricht, die anzeigt, dass die mitgeteilte(n) Nummer(n) vollständig übereinstimmt (übereinstimmen), empfangen wird, die Quarantäne geleert wird, ohne weiter verarbeitet zu werden.

3. Verfahren gemäß Anspruch 2, **dadurch gekennzeichnet, dass** das Verfahren ferner umfasst:
in dem Prozess des Meldens der Nummer(n) durch den Media Gateway wird, wenn erkannt wird, dass ein Benutzer aufgelegt hat, die Quarantäneliste geleert und das Auflegen wird unmittelbar der Media-Gateway-Steuereinheit gemeldet.

4. Verfahren gemäß Anspruch 2, **dadurch gekennzeichnet, dass** die Media-Gateway-Steuereinheit eine Medienverbindungsherstellungsnachricht CRCX an den Media Gateway sendet, nachdem das Empfangen der Nummer(n) abgeschlossen ist.

5. Verfahren gemäß Anspruch 4, **dadurch gekennzeichnet, dass** das Verfahren ferner umfasst:
wenn der Media Gateway die CRCX und die eingebettete Benachrichtigungsanfrage, die von der Media-Gateway-Steuereinheit gesendet worden sind, empfängt, Verarbeiten, durch den Media Gateway, zunächst der CRCX und dann der eingebetteten Benachrichtigungsanfrage nach Beendigung der Verarbeitung der CRCX.

6. Verfahren gemäß einem der Ansprüche 1 bis 5, **dadurch gekennzeichnet, dass** die übereinstimmende Nummer auf folgende Weise erhalten wird:
Ausführen eines Abgleichs zwischen einer Nummer mit der höchsten Position unter allen Nummern in der ausgegebenen Nummernliste und einer Nummer von einer ersten Nummer, die von der Quarantäneliste empfangen worden ist; wobei, falls es einen übereinstimmenden Posten gibt, eine weitere Nummer hinzugefügt wird, um mit Nummern mit den höchsten zwei Positionen unter allen Nummern in der ausgegebenen Nummernliste übereinzustimmen, bis eine Nummer, die eine maximale übereinstimmende Größe hat, welches die übereinstimmende Nummer ist, bestimmt wird.

7. Verfahren gemäß Anspruch 6, **dadurch gekennzeichnet, dass** das Verfahren ferner umfasst: wenn ein Benutzer ein Abheben meldet, wird die Ziffernkarte von der Media-Gateway-Steuereinheit an den Media Gateway ausgegeben, oder die Ziffernkarte wird von der Media-Gateway-Steuereinheit an den Media Gateway ausgegeben, wenn der Media Gateway eingeschaltet wird.

8. Verfahren gemäß Anspruch 6, **dadurch gekennzeichnet, dass** die Nummern in der Quarantäneliste in der Reihenfolge von Paketen von Nummern, die von dem Media Gateway empfangen werden, geordnet werden; und der Media Gateway die Nummern in der Reihenfolge von der höchsten Position zur niedrigsten Position in der Quarantäneliste meldet.

9. System, umfassend einen Media Gateway und eine Media-Gateway-Steuereinheit, wobei der Media Gateway und die Media-Gateway-Steuereinheit dafür ausgelegt sind, die Schritte nach einem der Ansprüche 1 bis 8 auszuführen.

## Revendications

1. Un procédé de recueil de numéros en fonction du protocole de commande de passerelle multimédia, comprenant :
A. le signalement par une passerelle multimédia d'un signal de décrochage à un dispositif de commande de passerelle multimédia, l'envoi par le dispositif de commande de passerelle multimédia d'une demande de notification RQNT à la passerelle multimédia, la RQNT comprenant des informations de demande de réception de numéro (102),
B. la réception par la passerelle multimédia des informations de demande de réception de numéro, l'appariement d'une liste de numéros distribuée par le dispositif de commande de passerelle multimédia avec des informations de numéros placées en mémoire tampon dans une liste de mise en quarantaine, et l'envoi de numéro(s) apparié(s) au dispositif de commande de passerelle multimédia par l'intermédiaire d'un message de notification NTFY (103),
C. la détermination par le dispositif de commande de passerelle multimédia de la quantité de numéros à recevoir en fonction du(es) numéro(s) apparié(s), l'envoi de la RQNT et d'une demande de notification imbriquée à la passerelle multimédia lorsque la quantité de numéros à recevoir est deux ou plus, après quoi l'étape D est exécutée; et l'envoi de la RQNT à la passerelle multimédia lorsque la quantité de numéros à recevoir est un, après quoi l'étape E est exécutée, le procédé étant achevé lorsque la quantité de numéros à recevoir est zéro, les informations de demande de réception de numéro étant comprises à la fois dans la RQNT et la demande de notification imbriquée (104, 105, 107, 109),
D. l'extraction par la passerelle multimédia d'un numéro à la position la plus élevée dans la liste de mise en quarantaine et le signalement de celui-ci au dispositif de commande de passerelle multimédia par l'intermédiaire du NTFY, après la réception du NTFY, l'extraction par le dispositif de commande de passerelle multimédia du numéro à la position la plus élevée et le renvoi d'un message d'accusé de réception à la passerelle multimédia, le signalement ensuite par la passerelle multimédia d'un numéro à la deuxième position la plus élevée par l'intermédiaire du NTFY, et ensuite le retour à l'étape C (106), et
E. l'extraction par la passerelle multimédia d'un premier numéro dans la liste de mise en quarantaine et le signalement de celui-ci au dispositif de commande de passerelle multimédia par l'intermédiaire du NTFY, une fois le NTFY reçu, l'extraction par le dispositif de commande de passerelle multimédia du premier numéro et le renvoi d'un message d'accusé de réception à la passerelle multimédia, et ensuite le procédé est achevé (108).

2. Le procédé selon la revendication 1, **caractérisé en ce que**, après le signalement réussi de numéros par la passerelle multimédia, les numéros signalés avec succès sont supprimés de la liste de mise en quarantaine, et lorsqu'un message indiquant que les numéros signalés sont totalement appariés est reçu, la liste de mise en quarantaine est effacée sans autre traitement.

3. Le procédé selon la revendication 2, **caractérisé en ce que** le procédé comprend en outre :
au cours du signalement des numéros par la passerelle multimédia, lorsqu'un utilisateur est détecté être raccroché, la liste de mise en quarantaine est effacée, et l'état raccroché est immédiatement signalé au dispositif de commande de passerelle multimédia.

4. Le procédé selon la revendication 2, **caractérisé en ce que** le dispositif de commande de passerelle multimédia envoie un message d'établissement de connexion multimédia CRCX à la passerelle multimédia après l'achèvement de la réception des numéros.

5. Le procédé selon la revendication 4, **caractérisé en ce que** le procédé comprend en outre :
lorsque la passerelle multimédia reçoit le CRCX et la demande de notification imbriquée envoyée par le dispositif de commande de passerelle multimédia, le traitement par la passerelle multimédia du CRCX en premier lieu et ensuite de la demande de notification imbriquée une fois le traitement du CRCX terminé.

6. Le procédé selon l'une quelconque des revendications 1 à 5, **caractérisé en ce que** le numéro apparié est obtenu de la manière suivante :
l'exécution d'un appariement entre un numéro avec la position la plus élevée parmi la totalité des numéros dans la liste de numéros distribuée et un numéro provenant d'un premier numéro reçu par la liste de mise en quarantaine, s'il existe un élément apparié, un numéro supplémentaire est ajouté de façon à apparier les numéros avec les deux positions les plus élevées parmi la totalité des numéros dans la liste de numéros distribuée jusqu'à ce qu'un numéro qui possède une quantité appariée maximale, qui est le numéro apparié, soit déterminé.

7. Le procédé selon la revendication 6, **caractérisé en ce que** le procédé comprend en outre : lorsqu'un utilisateur signale un état décroché, le pavé numérique est distribué par le dispositif de commande de passerelle multimédia à la passerelle multimédia ou le pavé numérique est distribué par le dispositif de commande de passerelle multimédia à la passerelle multimédia lorsque la passerelle multimédia est mise sous tension.

8. Le procédé selon la revendication 6, **caractérisé en ce que** les numéros dans la liste de mise en quarantaine sont ordonnés dans la séquence de paquets de numéros reçus par la passerelle multimédia, et la passerelle multimédia signale les numéros dans la séquence de la position la plus élevée à la position la plus basse dans la liste de mise en quarantaine.

9. Un système comprenant une passerelle multimédia et un dispositif de commande de passerelle multimédia, dans lequel la passerelle multimédia et le dispositif de commande de passerelle multimédia sont configurés de façon à exécuter les étapes selon l'une quelconque des revendications 1 à 8.
